(19) Europäisches Patentamt
European Patent Office
Office européen des brevets

(11) **EP 4 553 708 A1**

(12) **EUROPEAN PATENT APPLICATION**

(43) Date of publication:
14.05.2025 Bulletin 2025/20

(21) Application number: 24159873.9

(22) Date of filing: 27.02.2024

(51) International Patent Classification (IPC):
*G06N 3/067* (2006.01)  *G06N 3/084* (2023.01)
*G06N 3/0464* (2023.01)  *G06N 3/0499* (2023.01)

(52) Cooperative Patent Classification (CPC):
**G06N 3/0675; G06N 3/084;** G06N 3/0464;
G06N 3/0499

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 09.11.2023  CN 202311483723

(71) Applicant: **Tsinghua University**
**Beijing 100084 (CN)**

(72) Inventors:
• **Fang, Lu**
  **Beijing, 100084 (CN)**
• **Yuan, Xiaoyun**
  **Beijing, 100084 (CN)**

(74) Representative: **Petraz, Gilberto Luigi et al**
**GLP S.r.l.**
**Viale Europa Unita, 171**
**33100 Udine (IT)**

(54) **METHOD AND APPARATUS FOR DUAL-NEURON LARGE-SCALE INTELLIGENT OPTICAL COMPUTING**

(57)     A method and an apparatus for dual-neuron large-scale intelligent optical computing are disclosed. The method includes: constructing an optoelectronic computing unit, and obtaining an optical neuron by modeling the optoelectronic computing unit; abstracting the optical neuron as an artificial neuron based on a mathematical abstraction manner; constructing an optoelectronic neural network by connecting a plurality of artificial neurons, and performing a global optimization on network parameters of all the artificial neurons by applying end-to-end gradient descent on the optoelectronic neural network; optimizing physical parameters of the optical neuron based on the artificial neuron after the global optimization; and computing the optoelectronic neural network based on the optimized parameters of the optical neuron.

FIG. 1

**EP 4 553 708 A1**

**Description**

**TECHNICAL FIELD**

The invention relates to a field of optoelectronic network computation, and specifically to a method and an apparatus for dual-neuron large-scale intelligent optical computing.

**BACKGROUND**

In recent years, the development of a deep neural network brings revolutionary progresses in the field of artificial intelligence (AI), and has been implemented in many tasks such as image recognition and object segmentation. The deep neural network at the present stage requires a specific computing device to implement fast reverse training and forward prediction, for example, a graphics processing unit (GPU), an embedded neural network processing unit (NPU), and a field-programmable gate array (FPGA). However, in recent years, as the molar law slows down, a size of an electronic transistor is approximate to a physical limit, and the computing power development of a silicon-based electronic computing chip has been gradually difficult to satisfy requirements of an intelligent algorithm. Thus, although the large-scale neural network has an outstanding performance, it is generally less applied in actual landing applications.

For the development bottleneck encountered by the silicon-based electronic computing chip at the present stage, researchers propose using light to realize calculation of the neural network, such as a diffraction neural network and a photon computing processor. Optical computing can overcome an inherent limitation of current mainstream electronic computing, which is characterized by high speed, high parallelism, high computing power and low energy consumption. It has become an international research hotspot to realize reasoning calculation of the neural network via optical computing. Nonlinearity is crucial to the neural network. Since the existing optical nonlinear technology is not mature, a combination of the optical computing and electric computing is a mainstream operation in the current technical system, which is referred to as optoelectronic computing. In the optoelectronic computing, the optical computing and the electric calculation are complementary with each other, a linear operation occupying most of the computing amount is undertaken by the optical computing, and the electric computing is mainly responsible for a non-linear operation which is difficult to be implemented in the related optical technology.

The existing optoelectronic neural network is usually implemented in a manner of simulation training + physical deployment. Taking a diffraction neural network for example, after propagation of a coherent light field in the space and modulation of a phase mask on the light field are modeled by Fourier optics, a relationship between input-output can be modeled as a micro function, and all modulation parameters of the network may be optimized by end-to-end gradient descent. However, the existing optical neural network is limited to a complex network model and network parameters difficult to be optimized, and is still limited to a relatively simple data set such as MNIST, Fashion-MNIST and CIFAR, and cannot be trained by using a modern large-scale data set such as ImageNet, and the network performance still has a large distance from practical application.

**SUMMARY**

The present invention is intended to solve one of technical problems in the related art at least to a certain extent.

A first purpose of the invention is to provide a method for dual-neuron large-scale intelligent optical computing, to be applied to construction of a large-scale diffraction optoelectronic neural network, which solves the problem that the existing diffraction neural network is trained with a large computing power requirement, a slow training speed and a poor convergence effect, and it is difficult to achieve training of the large-scale optoelectronic diffraction neural network.

A second purpose of the present invention is to propose an apparatus for dual-neuron large-scale intelligent optical computing.

A third purpose of the present invention is to provide an electronic device.

To achieve the above purpose, according to a first aspect of embodiments of the present invention, there is provided a method for dual-neuron large-scale intelligent optical computing. The meth includes:

constructing an optoelectronic computing unit, and obtaining an optical neuron by modeling the optoelectronic computing unit;
abstracting the optical neuron as an artificial neuron based on a mathematical abstraction manner;
constructing an optoelectronic neural network by connecting a plurality of artificial neurons, and performing a global optimization on network parameters of all artificial neurons by applying end-to-end gradient descent on the optoelectronic neural network;
optimizing physical parameters of the optical neuron based on the artificial neuron after the global optimization; and
computing the optoelectronic neural network based on the optimized parameters of the optical neuron.

Optionally, the optoelectronic computing unit includes:

an optical computing module, configured to modulate a phase of an input light field signal, in which the optical computing module consists of two lenses and one optimized spatial light modulator, and the optimized spatial light modulator is placed in the middle of the two lenses; and
an electronic connection module, configured to convert an output light field signal of the optical computing module into an electrical signal, and perform a nonlinear computation on the electrical signal, in which the electronic connection module comprises a light intensity detector array and a nonlinear computing unit.

Optionally, obtaining the optical neuron by modeling the optoelectronic computing unit includes:

representing a planar light field signal by a complex matrix $U(x, y) = A(x, y)e^{\phi(x,y)}$, where $A$ represents an amplitude of the planar light field signal, $\phi$ represents a phase of the planar light field signal, and $(x, y)$ represents coordinates of the planar light field signal on a plane; and
calculating a signal after the planar light field signal $U(x, y) = A(x, y)e^{\phi(x,y)}$ is propagated for a distance in the free space according to the Fourier optics, a propagation process expression being:

$$U(x, y, z) = \int_{-\infty}^{\infty} df_x df_y \int_{\Sigma} U(x_0, y_0, 0) \exp\left(j\frac{2\pi z}{\lambda}\sqrt{1 - \lambda^2 f_x^2 - \lambda^2 f_y^2}\right)$$
$$\cdot \exp\{j2\pi[f_x(x - x_0) + f_y(y - y_0)]\}dx_0 dy_0$$

where, $U(x, y, z)$ is the signal after the planar light field signal $U(x, y)$ is propagated for a distance z in the space, $(f_x, f_y) = (\frac{\cos\alpha}{\lambda}, \frac{\cos\beta}{\lambda})$, $\cos\alpha$ and $\cos\beta$ represent direction cosines of a wave vector, $\lambda$ represents a wavelength of the planar light field signal, and z is a propagation distance of the planar light field signal in the space, and $U(x_0, y_0, 0)$ is a complex light field signal at an initial position; and
selecting a pixel size of the spatial light modulator on an input side as an optical simulation pixel size during a simulation calculation, discretizing the propagation process expression, and achieving acceleration of the simulation calculation by using a fast fourier transform (FFT), an expression being:

$$U(x, y, z) = F^{-1}\{F(U(x_0, y_0, 0)) \exp[j2\pi w(u, v)z]\}$$

$$w(u, v) = \begin{cases}(\lambda^{-2} - u^2 - v^2)^{1/2} & u^2 + v^2 \leq \lambda^{-2} \\ 0 & otherwise\end{cases}$$

where, $F$ represents an FFT, $F^{-1}$ represents an inverse FFT, $u$ and $v$ represents frequency domain coordinates after the FFT, and w() represents an intermediate function; and
obtaining a fully forward mathematical model of the optical computing module, due to phase shifts being respectively applied to a phase of the input light field signal when the input light field signal is propagated to the lenses and the optimized spatial light modulator, an expression being:

$$U_{out}(\phi_m, f) = P_f\left(P_f\left(P_f\left(P_f(U_{in})e^{\phi_l}\right)e^{\phi_m}\right)e^{\phi_l}\right)$$

where, the input light field signal $U_{in}$ and the output light field signal $U_{out}$ are both complex light fields, $P_f$ is a propagation function, $\phi_l$ is a modulation phase of a lens, $\phi_m$ is a modulation phase of the optimized spatial light modulator, and $f$ is a propagation distance of the input light field signal in the free space.

Optionally, abstracting the optical neuron as the artificial neuron based on the mathematical abstraction manner includes:

approximating the fully forward mathematical model as a single-channel complex-valued convolution with large-size kernel function; and
making the single-channel complex-valued convolution be equivalent to a multi-channel complex-valued convolution with small kernel function, to obtain the artificial neuron.

Optionally, constructing the optoelectronic neural network by connecting the plurality of artificial neurons includes:

constructing a connection network by connecting the plurality of artificial neurons in a cascaded or parallel manner; and
obtaining the optoelectronic neural network by providing an electronic fully-connected layer at an end of the connection network.

Optionally, optimizing physical parameters of the optical neuron based on the artificial neuron after the global optimization includes:

obtaining a tiled large-size kernel function by tiling the multi-channel complex-valued small kernel function based on a complex-valued point spread function (PSF) model; and
optimizing the modulation phase on each of the optimized spatial light modulators in the optical neuron by gradient descent, the optimization expression being:

$$\min_{\phi_m} \left\| P_f\left(P_f\left(P_f\left(P_f(\delta)e^{\phi_l}\right)e^{\phi_m}\right)e^{\phi_l}\right) - PSF \right\|_2^2,$$

where, $P_f(\cdot)$ is a light field propagation function.

To achieve the above purpose, according to a second aspect of embodiments of the present invention, there is provided an apparatus for dual-neuron large-scale intelligent optical computing. The apparatus includes:

a construction module, configured to construct an optoelectronic computing unit, and obtain an optical neuron by modeling the optoelectronic computing unit;
an abstraction module, configured to abstract the optical neuron as an artificial neuron based on a mathematical abstraction manner;
a first optimization module, configured to construct an optoelectronic neural network by connecting a plurality of artificial neurons, and perform a global optimization on network parameters of all the artificial neurons by applying end-to-end gradient descent on the optoelectronic neural network;
a second optimization module, configured to optimize physical parameters of the optical neuron based on the artificial neuron after the global optimization; and
a computing module, configured to compute the optoelectronic neural network based on the optimized parameters of the optical neuron.

In order to achieve the above purposes, according to a third aspect of embodiments of the present invention, there is provided an electronic device. The device includes a processor and a memory communicatively connected to the processor and storing computer executable instructions.
The processor executes the computer executable instructions stored in the memory, to implement any one of the methods in the first aspect.
The technical solution according to embodiments of the present invention at least may bring following beneficial effects:
It is applicable to construction and parameter training of a large-scale diffraction optoelectronic neural network, which solves the problem that training of the large-scale diffraction optoelectronic network is difficult to be achieved due to large training computing power and storage requirements and a slow convergence speed of the existing diffraction optoelectronic network.
Additional aspects and advantages of embodiments of the invention will be given in part in the following descriptions, become apparent in part from the following descriptions, or be learned from the practice of the embodiments of the invention.

## BRIEF DESCRIPTION OF THE DRAWINGS

The above and/or additional aspects and advantages of the present invention will become obvious and easy to understand from the following description of the embodiments in conjunction with the accompanying drawings:

FIG. 1 is a flowchart illustrating a method for dual-neuron large-scale intelligent optical computing according to an embodiment of the invention;

FIG. 2 is a diagram illustrating an optoelectronic computing unit according to an embodiment of the present invention;

FIG. 3 is a diagram illustrating abstracting an optoelectronic computing module as a complex-valued convolution according to an embodiment of the present invention;

FIG. 4 is a diagram illustrating making a single-channel complex-valued convolution be equivalent to a multi-channel complex-valued convolution with small kernel function according to an embodiment of the present invention;

FIG. 5 is a histogram illustrating classification performance of a CIFAR-10 data set according to an embodiment of the present invention;

FIG. 6 is a histogram illustrating classification performance of an ImageNet-32 data set according to an embodiment of the present invention;

FIG. 7 is a block diagram illustrating an apparatus for dual-neuron large-scale intelligent optical computing according to an embodiment of the invention;

FIG. 8 is a block diagram illustrating an electronic device.

## DETAILED DESCRIPTION

Embodiments of the present invention are described in detail below. Examples of the embodiments are shown in the accompanying drawing in which the constant same or similar labels indicate the same or similar components or components with the same or similar functions. The embodiments described below with reference to the accompanying drawings are exemplary, and are intended to explain the invention, but should not be understood as a limitation to the invention.

A method and an apparatus for dual-neuron large-scale intelligent optical computing according to embodiments of the invention are described with reference to attached drawings.

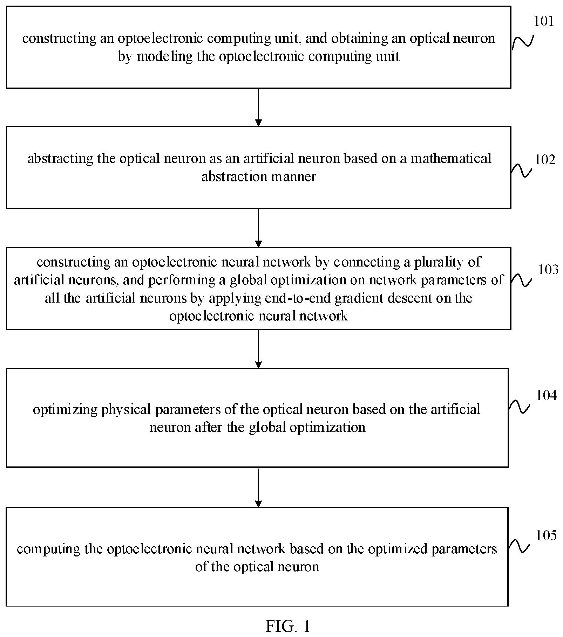

FIG. 1 is a flowchart illustrating a method for dual-neuron large-scale intelligent optical computing according to an embodiment of the invention.

As illustrated in FIG. 1, the method include following steps.

At step 101, an optoelectronic computing unit is constructed, and an optical neuron is obtained by modeling the optoelectronic computing unit.

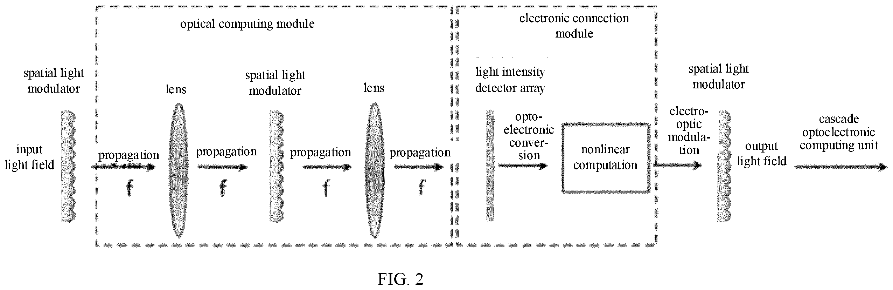

In an embodiment of the invention, as illustrated in FIG. 2, an optoelectronic computing unit based on a 4f system includes an optical computing module and an electronic connection module, and further includes a spatial light modulator for generating an input light field signal and reconverting an output light field signal into an optical signal as an input light field signal of a next optoelectronic computing unit.

The optical computing module consists of two lenses and one optimized spatial light modulator, and the optimized spatial light modulator is placed in the middle of the two lenses to constitute a 4f optical system, and the electronic connection module includes a light intensity detector array and a nonlinear computing unit.

In an embodiment of the invention, the input light field signal is received by a light intensity detection array via the optical computing module, and converted into an electronic signal for a non-linear computing, and a spatial light modulator on an output side reconverts the electronic signal calculated via electro-optical modulation into a light field signal, and inputs the light field signal into a next optoelectronic computing unit.

It may be understood that, in order to achieve optimization of parameters in the optoelectronic computing unit, an input-output mapping function of the optoelectronic computing unit needs to be deduced. Since the electronic connection module is achieved by a mature circuit, no specialized physical modeling is required. Therefore, in the invention, only an amplitude and a phase are modeled.

In an embodiment, a planar light field signal is represented by a complex matrix $U(x, y) = A(x, y)e^{\phi(x,y)}$, where $A$ represents an amplitude of the planar light field signal, $\phi$ represents a phase of the planar light field signal, and $(x, y)$ represents coordinates of the planar light field signal on a plane; and a signal after the planar light field signal $U(x, y) = A(x, y)e^{\phi(x,y)}$ is propagated for a distance in the free space is calculated according to the Fourier optics, a propagation process expression being:

$$U(x, y, z) = \int_{-\infty}^{\infty} \mathrm{d}f_x \mathrm{d}f_y \int_{\Sigma} U(x_0, y_0, 0) \exp\left(j\frac{2\pi z}{\lambda}\sqrt{1 - \lambda^2 f_x^2 - \lambda^2 f_y^2}\right)$$
$$\cdot \exp\{j2\pi[f_x(x - x_0) + f_y(y - y_0)]\}_{\mathrm{d}}x_0 \mathrm{d}y_0$$

where, $U(x, y, z)$ is the signal after the planar light field signal $U(x, y)$ is propagated for a distance $z$ in the space,

$$\left(f_x, f_y\right) = \left(\frac{\cos \alpha}{\lambda}, \frac{\cos \beta}{\lambda}\right)$$

, $\cos \alpha$ and $\cos \beta$ represent direction cosines of a wave vector, $\lambda$ represents a wavelength of the planar light field signal, and z is a propagation distance of the planar light field signal in the space, and $U(x_0, y_0, 0)$ is a complex light field signal at an initial position.

Subsequently, a pixel size of a spatial light modulator on an input side is selected as an optical simulation pixel size during a simulation calculation, a discretization processing is performed on the propagation process expression, and acceleration of the simulation calculation is achieved by using a fast fourier transform (FFT), an expression being:

$$U(x, y, z) = F^{-1}\{F(U(x_0, y_0, 0)) \exp[j2\pi w(u, v)z]\}$$

$$w(u, v) = \begin{cases} (\lambda^{-2} - u^2 - v^2)^{1/2} & u^2 + v^2 \leq \lambda^{-2} \\ 0 & otherwise \end{cases}$$

where, $F$ represents an FFT, $F^{-1}$ represents an inverse FFT, $u$ and $v$ represent frequency domain coordinates after the FFT, and $w()$ represents an intermediate function.

In an embodiment of the invention, $U(x_0, y_0, 0)$ is converted to a frequency domain via the FFT, and $w$ is a function name, and defined in a second line, and is configured for a propagation process of a computing light field in a first line.

Since phase shifts are respectively applied to a phase of the input light field signal when the input light field signal is propagated to the lenses and the optimized spatial light modulator, a fully forward mathematical model of the optical computing module is obtained, an expression being:

$$U_{out}(\phi_m, f) = P_f\left(P_f\left(P_f\left(P_f(U_{in})e^{\phi_l}\right)e^{\phi_m}\right)e^{\phi_l}\right)$$

where, the input light field signal $U_{in}$ and the output light field signal $U_{out}$ are both complex light fields, $P_f$ is a propagation function, $\phi_l$ is a modulation phase of a lens, $\phi_m$ is a modulation phase of the optimized spatial light modulator, and $f$ is a propagation distance of the input light field signal in the free space.

In a possible embodiment, the lens is a thin lens, and the modulation phase is:

$$\phi_l = -\frac{2\pi}{\lambda}\frac{x^2+y^2}{2f},$$

where $(x, y)$ are coordinates on a lens plane, and f is a focal length of the lens.

At step 102, the optical neuron is abstracted as an artificial neuron based on a mathematical abstraction manner.

It may be understood that, after deduction of step 101, mathematical modeling of the optical computing module has been achieved, and a relationship between the input and the output has been expressed as a differentiable optimization function. And, it can be seen from a derivation process that a forward function of the optical computing module is very complex, and includes 4 free space propagations and 3 phase modulations, in which calculation of each of the 4 free space propagations requires 1 FFT, 1 iFFT, and 1 multiplication operation. However, each layer of a conventional artificial neural network generally only has one multiplication operation. That is, complexity of an optical computing module is equivalent to over 10 layers of conventional neural networks, which is a very large challenge for efficient optimization of network parameters.

Therefore, at the step, a mathematical abstraction is proposed to simplify the forward function of the optical computing module.

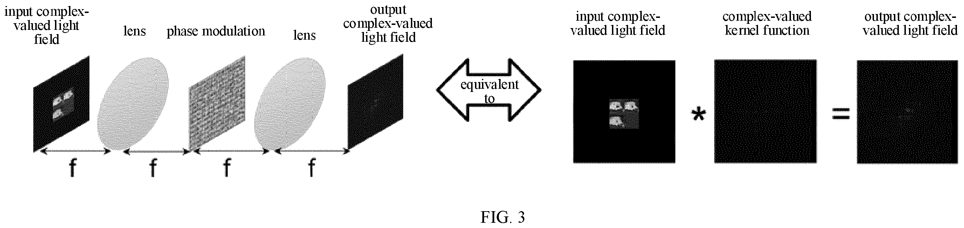

The specific mathematical abstraction process is as illustrated in FIG. 3, and the fully forward mathematical model is approximated as a single-channel complex-valued convolution with large-size kernel function according to the Fourier optics.

However, the large-size kernel function is still difficult to be optimized, and is very limited in performance improvement compared with a small-size kernel function, and is rarely used in an existing artificial neural network. In addition, only a convolution operation of a single channel may severely limit performance of the network.

Therefore, in the invention, the single-channel complex-valued convolution is made to be equivalent to a multi-channel complex-valued convolution with small-kernel function again.

It may be understood that the multi-channel complex-valued convolution with small-kernel function is similar to a convolution layer in the existing convolutional neural network, and mainly differs in the input and the convolution kernel in the present invention are complex values, and a bias is 0.

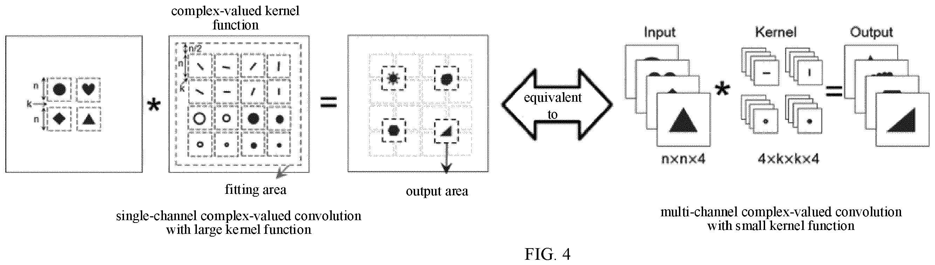

In an embodiment of the invention, as illustrated in FIG. 4, steps in which the single-channel complex-valued convolution is made to be equivalent to a multi-channel complex-valued convolution with small-kernel function are as follow:

(1) a multi-channel input is tiled into a single-channel large graph;
(2) the small-size kernel function is filled with 0, and filled into an input image size n from the original kernel function size k;
(3) the filled multi-channel kernel function is tiled into a single-channel large-size kernel function; and
(4) a convolution calculation result is cropped from a convolution result of the single-channel complex-valued large kernel function.

Therefore, the single-channel complex-valued convolution is made to be equivalent to a multi-channel complex-valued convolution with small-kernel function.

It should be noted that, in order to correspond to an abstracted artificial neuron, a process in which the electronic connection module implements a nonlinear computation in the present invention is optimized.

In an embodiment of the invention, the process in which the electronic connection module implements the nonlinear computation includes following steps.

(1) An output area is cropped from a calculation result of the optical computing module, which is implemented by arranging the light intensity detector array in the output area.
(2) A complex light field signal output by the optical computing module is converted into an electrical signal, which is directly implemented by the light intensity detector array on a hardware in an optoelectronic conversion process.
(3) Average pooling is performed, which may be implemented by designing a pixel size of an optoelectronic conversion device in the light intensity detector array.
In a possible embodiment, the pixel size of the optoelectronic conversion device is set to be twice a size of an optical simulation pixel, that is, average pooling of 2x2 may be achieved.
(4) Electro-optical modulation is performed, the spatial light modulator on the output side re-modulates the electrical signal generated at the above steps on a phase dimension of the light field as an input of a next optoelectronic computing unit.

It may be understood that there is no complex computation in the electronic connection unit, which may be quickly implemented by designing a dedicated circuit.

At step 103, an optoelectronic neural network is constructed by connecting a plurality of artificial neurons, and a global optimization is performed on network parameters of all the artificial neurons by applying end-to-end gradient descent on the optoelectronic neural network.

In an embodiment of the invention, the artificial neuron abstracted at step 102 is connected to obtain an optoelectronic neural network.

It may be understood that the connection manner mainly includes a parallel connection and a cascade connection. The parallel connection may increase a width of the network, and the cascade connection may increase a depth of the network.

It may be understood that in a specific application scenario, the parallel connection or the cascade connection is selected based on an actual scenario to construct an optoelectronic neural network.

It may be understood that an electronic fully-connected layer is provided at an end of the network to output a final classification or regression result.

And, in the embodiments of the invention, compared with an optical neuron, a forward function model of the artificial neuron is simpler and has fewer parameters, so that the end-to-end gradient descent may be converged to a better result at a faster speed.

At step 104, physical parameters of the optical neuron are optimized based on the artificial neuron after the global optimization.

In embodiments of the present invention, since the optical computing module is made to be equivalent to the complex-valued convolution, when optical neuron parameters are optimized, only a unit pulse response of the optical computing module needs to be optimized, and does not need to be learned from the data set and the annotation.

In a possible embodiment, the complex light field of the input pulse function only has a central pixel value of $1+0j$, and remaining pixel values are 0.

In an embodiment of the invention, the complex PSF model tiles the multi-channel complex-valued small kernel function based on the manner of step 103 to obtain a tiled large-size kernel function, and optimizes the modulation phase on each optimized spatial light modulator in the optical neuron by gradient descent, the optimization expression being:

$$\min_{\phi_m}\left\|P_f\big(P_f\big(P_f\big(P_f(\delta)e^{\phi_l}\big)e^{\phi_m}\big)e^{\phi_l}\big) - PSF\right\|_2^2,$$

where, $P_f(\cdot)$ is a light field propagation function.

It may be understood that all optoelectronic computing units may be independently optimized in parallel, and neurons on all optoelectronic computing units cascaded together do not need to be optimized simultaneously, which reduces a parameter quantity and a number of layers of the network, and greatly reduces difficulty of gradient descent optimization.

At step 105, the optoelectronic neural network is computed based on the optimized parameters of the optical neuron.

In an embodiment of the invention, phase modulation parameters of the optimized spatial light modulator in the optimized optical computing module and parameters of the nonlinear computing unit are deployed on a hardware, to implement computation of the optoelectronic neural network.

An embodiment is proposed below to illustrate the method for dual-neuron large-scale intelligent optical computing according to the present invention.

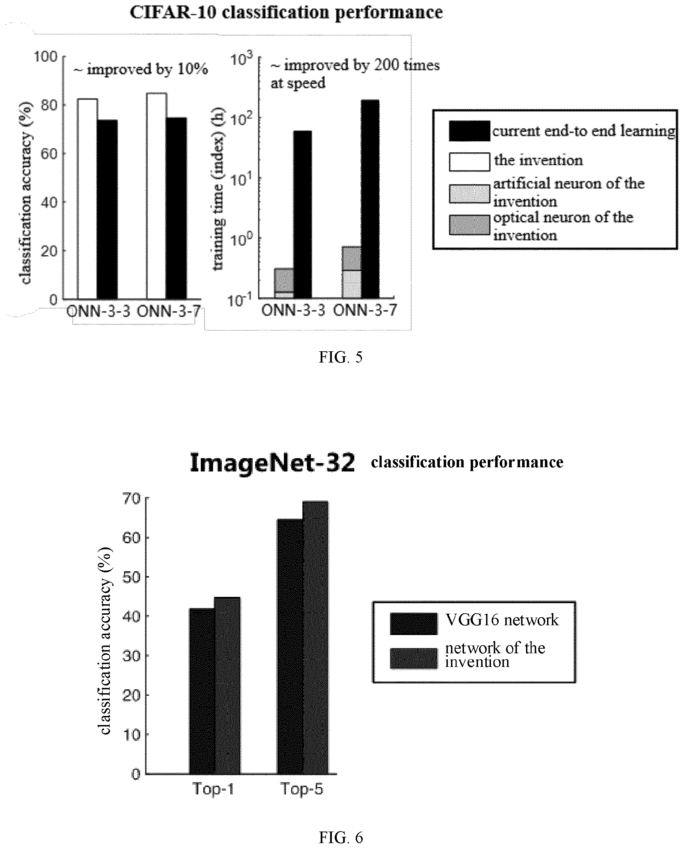

As illustrated in FIG. 5, ONN-3-3 is a three-layer optical neural network including 3 optoelectronic computing units, and ONN-3-7 is a three-layer optical neural network including seven optoelectronic computing units (first two layers each having 3 optoelectronic computing units that are connected in parallel, and a third layer is 1 optoelectronic computing unit).

After the method for computing intelligent light provided in the invention is applied, compared with the existing end-to-end learning, the optical neural network achieves 10% performance improvement and more than two orders of magnitudes of training acceleration on a CIFAR-10 data set.

In another possible embodiment, as illustrated in FIG. 6, a large optical neural network is constructed, which implements training of an ImageNet-32 large data set, and the classification performance (Top-1, Top-5 accuracy) exceeds a VGG16 network widely applied in the field of computer vision. Due to high complexity of the forward function of the optical neuron, a large number of computing resources are required during training. Therefore, the existing end-to-end learning may only support training of an optical neural network consisting of more than ten optoelectronic computing units. In the invention, the optical neurons may be independently optimized, and an artificial neuron model that needs to be end-to-end optimized is very simple, so that training of an optical neural network consisting of 100 optoelectronic computing units may be supported, and a size of a trainable network is improved by 10 times.

The present invention is applicable to construction and parameter training of a large-scale diffraction optoelectronic neural network, which solves the problem that training of the large-scale diffraction optoelectronic network is difficult to be achieved due to large training computing power and storage requirements and a slow convergence speed of the existing diffraction optoelectronic network.

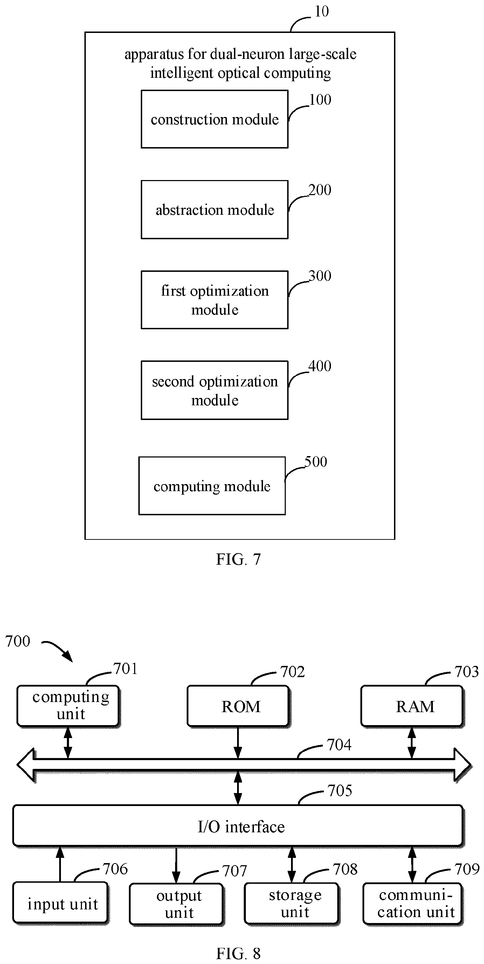

FIG. 7 is a block diagram illustrating an apparatus 10 for dual-neuron large-scale intelligent optical computing according to an embodiment of the invention. The apparatus 10 includes a construction module 100, an abstraction module 200, a first optimization module 300, a second optimization module 400 and a computing module 500.

The construction module 100 is configured to construct an optoelectronic computing unit, and obtain an optical neuron by modeling the optoelectronic computing unit.

The abstraction module 200 is configured to abstract the optical neuron as artificial neuron based on a mathematical abstraction manner.

The first optimization module 300 is configured to construct an optoelectronic neural network by connecting a plurality artificial neurons, and perform a global optimization on network parameters of all the artificial neurons by applying end-to-end gradient descent on the optoelectronic neural network.

The second optimization module 400 is configured to optimize physical parameters of the optical neuron based on the artificial neuron after the global optimization.

The computing module 500 is configured to compute the optoelectronic neural network based on the optimized parameters of the optical neuron.

With regards to the apparatus in the above embodiments, the specific way in which each module performs the operation has been described in the embodiments of the method and will not be elaborated here.

FIG. 8 is a schematic block diagram illustrating an example electronic device 700 according to an embodiment of the present invention. The electronic device is intended to represent various types of digital computers, such as laptop computers, desktop computers, workstations, personal digital assistants, servers, blade servers, mainframe computers, and other suitable computers. The electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the invention described and/or required herein.

As illustrated in FIG. 8, a device 700 includes a computing unit 701, configured to execute various appropriate actions and processes according to a computer program stored in a read-only memory (ROM) 702 or loaded from a storage unit 708 to a random access memory (RAM) 703. In the RAM 703, various programs and data required for the device 700 may be stored. The computing unit 701, the ROM 702 and the RAM 703 may be connected with each other by a bus 704. An input/output(I/O) interface 705 is also connected to the bus 704.

A plurality of components in the device 700 are connected to an I/O interface 705, and includes: an input unit 706, for example, a keyboard, a mouse; an output unit 707, for example, various types of displays, speakers; a storage unit 708, for example, a magnetic disk, an optical disk; and a communication unit 709, for example, a network card, a modem, a wireless transceiver. The communication unit 709 allows the device 700 to exchange information/data through a computer network such as internet and/or various types of telecommunication networks and other devices.

The computing unit 701 may be various types of general and/or dedicated processing components with processing and computing ability. Some examples of a computing unit 701 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 701 executes various methods and processes as described above, for example, a method for responding a speech command. For example, in some embodiments, the method for responding the speech command may be further implemented as a computer software program, which is physically contained in a machine readable medium, such as a storage unit 708. In some embodiments, a part or all of the computer program may be loaded and/or installed on the device 700 via the ROM 702 and/or a communication unit 709. When the computer program is loaded on the RAM 703 and executed by the computing unit 701, one or more steps in the method for responding a speech command as described above may be performed. Alternatively, in other embodiments, the computing unit 701 may be configured to the method for responding the speech command in other appropriate ways (for example, by virtue of a firmware).

Various implementation modes of systems and technologies described herein may be implemented in a digital electronic circuit system, an integrated circuit system, a field programmable gate array(FPGA), a dedicated application specific integrated circuit (ASIC), a system on a chip (SoC), a load programmable logic device (CPLD), a computer hardware, a firmware, a software, and/or combinations thereof. The implementations may include: implemented in one or more computer programs. The one or more computer programs may be executed and/or interpreted on a programmable system including at least one programmable processor. The programmable processor may be a dedicated or general-purpose programmable processor, may receive data and instructions from a storage system, at least one input device, and at least one output device, and transmit the data and the instructions to the storage system, the at least one input device, and the at least one output device.

A computer code configured to execute a method in the present invention may be written with one or any combination of multiple programming languages. These programming languages may be provided to a processor or a controller of a general-purpose computer, a dedicated computer, or other programmable apparatuses for data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present invention, a machine-readable medium may be a tangible medium that may contain or store a program intended for use in or in conjunction with an instruction execution system, an apparatus or a device. The machine-readable medium may be a machine-readable signal medium or a machine-readable storage medium. The machine-readable medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an EPROM programmable read-only ROM (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input or a tactile input).

Systems and technologies described herein may be implemented in a computing system (for example, as a data server) including a background component, or a computing system (for example, an application server) including a middleware component, or a computing system including a front-end component (for example, a user computer with a graphical user interface or a web browser, and the user may interact with implementations of the systems and technologies described herein via the graphical user interface or the web browser), or in a computing system including any combination of the background component, the middleware component, or the front-end component. Components of the system may be interconnected by any form or medium of digital data communication (for example, a communication network). Examples of the communication network include a local area network (LAN), a wide area network (WAN), an Internet, and a blockchain network.

The computer system may include a client and a server. The client and the server are generally far away from each other and generally interact with each other through a communication network. The relationship between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and a "Virtual Private Server" (VPS) service. The server further may be a server with a distributed system, or a server in combination with a blockchain.

It should be noted that various forms of processes shown above may be used to reorder, add, or delete steps. For example, steps described in the present invention may be executed in parallel, sequentially, or in a different order, as long as the desired result of the technical solution disclosed in the present invention may be achieved, which will not be limited herein.

The above are only specific embodiments of the present invention, enabling those skilled in the art to understand or realize the present invention. A variety of modifications to these embodiments would be apparent to those skilled in the art. The general solution defined herein can be implemented in other embodiments without departing from the scope of the present invention. Therefore, the present invention will not be limited to these embodiments herein, but should conform to the widest scope consistent with the novel features disclosed herein.

## Claims

1. A method for dual-neuron large-scale intelligent optical computing, comprising:

   constructing (101) an optoelectronic computing unit, and obtaining an optical neuron by modeling the optoelectronic computing unit;
   abstracting (102) the optical neuron as an artificial neuron based on a mathematical abstraction manner;
   constructing (103) an optoelectronic neural network by connecting a plurality of artificial neurons, and performing a global optimization on network parameters of all the artificial neurons by applying end-to-end gradient descent on the optoelectronic neural network;
   optimizing (104) physical parameters of the optical neuron based on the artificial neuron after the global optimization; and
   computing (105) the optoelectronic neural network based on the optimized parameters of the optical neuron.

2. The method according to claim 1, wherein the optoelectronic computing unit comprises:

   an optical computing module, configured to modulate a phase of an input light field signal, wherein the optical computing module consists of two lenses and one optimized spatial light modulator, and the optimized spatial light modulator is placed in the middle of the two lenses; and
   an electronic connection module, configured to convert an output light field signal of the optical computing module into an electrical signal, and perform a nonlinear computation on the electrical signal, wherein the electronic connection module comprises a light intensity detector array and a nonlinear computing unit.

3. The method according to claim 2, wherein obtaining the optical neuron by modeling the optoelectronic computing unit comprises:

   representing a planar light field signal by a complex matrix $U(x, y) = A(x, y)e^{\phi(x,y)}$, where $A$ represents an amplitude of the planar light field signal, $\phi$ represents a phase of the planar light field signal, and $(x, y)$ represents coordinates of the planar light field signal on a plane; and
   calculating a signal after the planar light field signal $U(x, y) = A(x, y)e^{\phi(x,y)}$ is propagated for a distance in a free space according to the Fourier optics, a propagation process expression being:

$$U(x, y, z) = \int_{-\infty}^{\infty} \mathrm{d}f_x \mathrm{d}f_y \int_{\Sigma} U(x_0, y_0, 0) \exp\left(j\frac{2\pi z}{\lambda}\sqrt{1 - \lambda^2 f_x^2 - \lambda^2 f_y^2}\right)$$
$$\cdot \exp\{j2\pi[f_x(x - x_0) + f_y(y - y_0)]\}\mathrm{d}x_0\mathrm{d}y_0$$

where, $U(x, y, z)$ is the signal after the planar light field signal $U(x, y)$ is propagated for a distance z in the space,

$$\left(f_x, f_y\right) = \left(\frac{\cos\alpha}{\lambda}, \frac{\cos\beta}{\lambda}\right)$$
, $\cos\alpha$ and $\cos\beta$ represent direction cosines of a wave vector, $\lambda$ represents a wavelength of the planar light field signal, and z is a propagation distance of the planar light field signal in the space, and $U(x_0, y_0, 0)$ is a complex light field signal at an initial position; and

selecting a pixel size of a spatial light modulator on an input side as an optical simulation pixel size during a simulation calculation, discretizing the propagation process expression, and achieving acceleration of the simulation calculation by using a fast fourier transform (FFT), an expression being:

$$U(x, y, z) = F^{-1}\{F(U(x_0, y_0, 0))\exp[j2\pi w(u, v)z]\}$$

$$w(u, v) = \begin{cases} (\lambda^{-2} - u^2 - v^2)^{1/2} & u^2 + v^2 \leq \lambda^{-2} \\ 0 & otherwise \end{cases}$$

where, $F$ represents the FFT, $F^{-1}$ represents an inverse FFT, $u$ and $v$ represent frequency domain coordinates after the FFT, and $w()$ represents an intermediate function; and

obtaining a fully forward mathematical model of the optical computing module, due to phase shifts being respectively applied to a phase of the input light field signal when the input light field signal is propagated to the lenses and the optimized spatial light modulator, an expression being:

$$U_{out}(\phi_m, f) = P_f\left(P_f\left(P_f\left(P_f(U_{in})e^{\phi_l}\right)e^{\phi_m}\right)e^{\phi_l}\right)$$

where, the input light field signal $U_{in}$ and the output light field signal $U_{out}$ are both complex light fields, $P_f$ is a propagation function, $\phi_l$ is a modulation phase of a lens, $\phi_m$ is a modulation phase of the optimized spatial light modulator, and $f$ is a propagation distance of the input light field signal in the free space.

4. The method according to claim 3, wherein abstracting the optical neuron as the artificial neuron based on the mathematical abstraction manner comprises:

approximating the fully forward mathematical model as a single-channel complex-valued convolution with large-size kernel function; and
making the single-channel complex-valued convolution be equivalent to a multi-channel complex-valued convolution with small kernel function, to obtain the artificial neuron.

5. The method according to any one of claims 1 to 4, wherein constructing the optoelectronic neural network by connecting the plurality of artificial neurons comprises:

constructing a connection network by connecting the plurality of artificial neurons in a cascaded or parallel manner; and
obtaining the optoelectronic neural network by providing an electronic fully-connected layer at an end of the connection network.

6. The method according to claim 4 or 5, wherein optimizing the physical parameters of the optical neuron based on the artificial neuron after the global optimization comprises:

obtaining a tiled large-size kernel function by tiling the multi-channel complex-valued small kernel function based on a complex-valued point spread function (PSF) model; and
optimizing the modulation phase on each of the optimized spatial light modulators in the optical neuron by gradient descent, the optimization expression being:

$$\min_{\phi_m} \left\| P_f\left(P_f\left(P_f\left(P_f(\delta)e^{\phi_l}\right)e^{\phi_m}\right)e^{\phi_l}\right) - PSF \right\|_2^2,$$

where, $P_f(\cdot)$ is a light field propagation function.

**7.** An apparatus (10) for dual-neuron large-scale intelligent optical computing, comprising:

a construction module (100), configured to construct an optoelectronic computing unit, and obtain an optical neuron by modeling the optoelectronic computing unit;
an abstraction module (200), configured to abstract the optical neuron as an artificial neuron based on a mathematical abstraction manner;
a first optimization module (300), configured to construct an optoelectronic neural network by connecting a plurality of artificial neurons, and perform a global optimization on network parameters of all the artificial neurons by applying end-to-end gradient descent on the optoelectronic neural network;
a second optimization module (400), configured to optimize physical parameters of the optical neuron based on the artificial neuron after the global optimization; and
a computing module (500), configured to compute the optoelectronic neural network based on the optimized parameters of the optical neuron.

**8.** The apparatus (10) according to claim 7, wherein the optoelectronic computing unit comprises:

an optical computing module, configured to modulate a phase of an input light field signal, wherein the optical computing module consists of two lenses and one optimized spatial light modulator, and the optimized spatial light modulator is placed in the middle of the two lenses; and
an electronic connection module, configured to convert an output light field signal of the optical computing module into an electrical signal, and perform a nonlinear computation on the electrical signal, wherein the electronic connection module comprises a light intensity detector array and a nonlinear computing unit.

**9.** The apparatus (10) according to claim 8, wherein the construction module (100) is further configured to:

represent a planar light field signal by a complex matrix $U(x, y) = A(x, y)e^{\phi(x,y)}$, where A represents an amplitude of the planar light field signal, $\phi$ represents a phase of the planar light field signal, and $(x, y)$ represents coordinates of the planar light field signal on a plane; and
calculate a signal after the planar light field signal $U(x, y) = A(x, y)e^{\phi(x,y)}$ is propagated for a distance in a free space according to the Fourier optics, a propagation process expression being:

$$U(x, y, z) = \int_{-\infty}^{\infty} \mathrm{d}f_x \mathrm{d}f_y \int_{\Sigma} U(x_0, y_0, 0) \exp\left(j\frac{2\pi z}{\lambda}\sqrt{1 - \lambda^2 f_x^2 - \lambda^2 f_y^2}\right)$$
$$\cdot \exp\{j2\pi[f_x(x - x_0) + f_y(y - y_0)]\}\mathrm{d}x_0\mathrm{d}y_0$$

where, $U(x, y, z)$ is the signal after the planar light field signal $U(x, y)$ is propagated for a distance z in the space,

$$\left(f_x, f_y\right) = \left(\frac{\cos\alpha}{\lambda}, \frac{\cos\beta}{\lambda}\right)$$
, cos $\alpha$ and cos $\beta$ represent direction cosines of a wave vector, $\lambda$ represents a wavelength of the planar light field signal, and z is a propagation distance of the planar light field signal in the space, and $U(x_0, y_0, 0)$ is a complex light field signal at an initial position; and
select a pixel size of a spatial light modulator on an input side as an optical simulation pixel size during a simulation calculation, discretize the propagation process expression, and achieve acceleration of the simulation calculation by using a fast fourier transform (FFT), an expression being:

$$U(x, y, z) = F^{-1}\{F(U(x_0, y_0, 0))\exp[j2\pi w(u, v)z]\}$$

$$w(u, v) = \begin{cases}(\lambda^{-2} - u^2 - v^2)^{1/2} & u^2 + v^2 \leq \lambda^{-2} \\ 0 & otherwise\end{cases}$$

where, $F$ represents the FFT, $F^{-1}$ represents an inverse FFT, $u$ and $v$ represent frequency domain coordinates after the FFT, and $w()$ represents an intermediate function; and
obtain a fully forward mathematical model of the optical computing module, due to phase shifts being respectively applied to a phase of the input light field signal when the input light field signal is propagated to the lenses and the optimized spatial light modulator, an expression being:

$$U_{out}(\phi_m, f) = P_f\big(P_f\big(P_f\big(P_f(U_{in})e^{\phi_l}\big)e^{\phi_m}\big)e^{\phi_l}\big)$$

where, the input light field signal $U_{in}$ and the output light field signal $U_{out}$ are both complex light fields, $P_f$ is a propagation function, $\phi_l$ is a modulation phase of a lens, $\phi_m$, is a modulation phase of the optimized spatial light modulator, and $f$ is a propagation distance of the input light field signal in the free space.

10. The apparatus (10) according to claim 9, wherein the abstraction module (200) is further configured to:

approximate the fully forward mathematical model as a single-channel complex-valued convolution with large-size kernel function; and
make the single-channel complex-valued convolution be equivalent to a multi-channel complex-valued convolution with small kernel function, to obtain the artificial neuron.

11. The apparatus (10) according to any one of claims 7 to 10, wherein the first optimization module (300) is further configured to:

construct a connection network by connecting the plurality of artificial neurons in a cascaded or parallel manner; and
obtain the optoelectronic neural network by providing an electronic fully-connected layer at an end of the connection network.

12. The apparatus (10) according to claim 10 or 11, wherein the second optimization module (400) is further configured to:

obtain a tiled large-size kernel function by tiling the multi-channel complex-valued small kernel function based on a complex-valued point spread function (PSF) model; and
optimize the modulation phase on each of the optimized spatial light modulators in the optical neuron by gradient descent, the optimization expression being:

$$\min_{\phi_m}\big\|P_f\big(P_f\big(P_f\big(P_f(\delta)e^{\phi_l}\big)e^{\phi_m}\big)e^{\phi_l}\big) - PSF\big\|_2^2,$$

where, $P_f(\cdot)$ is a light field propagation function.

constructing an optoelectronic computing unit, and obtaining an optical neuron by modeling the optoelectronic computing unit ⎯⎯ 101

↓

abstracting the optical neuron as an artificial neuron based on a mathematical abstraction manner ⎯⎯ 102

↓

constructing an optoelectronic neural network by connecting a plurality of artificial neurons, and performing a global optimization on network parameters of all the artificial neurons by applying end-to-end gradient descent on the optoelectronic neural network ⎯⎯ 103

↓

optimizing physical parameters of the optical neuron based on the artificial neuron after the global optimization ⎯⎯ 104

↓

computing the optoelectronic neural network based on the optimized parameters of the optical neuron ⎯⎯ 105

FIG. 1

FIG. 2

FIG. 3

FIG. 4

FIG. 5

FIG. 6

10

apparatus for dual-neuron large-scale
intelligent optical computing

construction module    100

abstraction module    200

first optimization
module    300

second optimization
module    400

computing module    500

FIG. 7

700

computing
unit    701

ROM    702

RAM    703

704

705

I/O interface

input unit    706

output
unit    707

storage
unit    708

communi-
cation unit    709

FIG. 8

Europäisches
Patentamt

European
Patent Office

Office européen
des brevets

# EUROPEAN SEARCH REPORT

Application Number

EP 24 15 9873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/164634 A1 (DAI QIONGHAI [CN] ET AL) 26 May 2022 (2022-05-26) * paragraph [0001] - paragraph [0062] * * figures 1A-3E *<br>- - - - - | 1-12 | INV.<br>G06N3/067<br>G06N3/084<br><br>ADD.<br>G06N3/0464<br>G06N3/0499 |
| A | US 2021/357737 A1 (HAMERLY RYAN [US] ET AL) 18 November 2021 (2021-11-18) * paragraph [0001] - paragraph [0138] * * figures 1-3, 5C, 8-10 *<br>- - - - - | 1-12 | |
| A | WO 2022/170004 A1 (NEUROPHOS LLC [US]) 11 August 2022 (2022-08-11) * paragraph [0001] - paragraph [0065] * * figures 1-6 *<br>- - - - - | 1-12 | |
| A | US 11 425 292 B1 (FANG LU [CN] ET AL) 23 August 2022 (2022-08-23) * column 1 - column 8 * * figures 1-6 *<br>- - - - - | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 31 July 2024 | Keresztury, Bence |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 9873

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | | Publication date | Patent family member(s) | | Publication date |
|---|---|---|---|---|---|
| US 2022164634 | A1 | 26-05-2022 | CN | 112418403 A | 26-02-2021 |
| | | | US | 2022164634 A1 | 26-05-2022 |
| US 2021357737 | A1 | 18-11-2021 | US | 2021357737 A1 | 18-11-2021 |
| | | | WO | 2020102204 A1 | 22-05-2020 |
| WO 2022170004 | A1 | 11-08-2022 | US | 2023376741 A1 | 23-11-2023 |
| | | | WO | 2022170004 A1 | 11-08-2022 |
| US 11425292 | B1 | 23-08-2022 | CN | 113630517 A | 09-11-2021 |
| | | | US | 11425292 B1 | 23-08-2022 |

EPO FORM P0459

For more details about this annex : see Official Journal of the European Patent Office, No. 12/82